# EUROPEAN PATENT SPECIFICATION

(11) **EP 2 565 878 B1**
(45) Date of publication and mention of the grant of the patent: **12.10.2016**
(21) Application number: 12182386.8
(22) Date of filing: 30.08.2012
(51) Int. Cl.: G21C 5/02, G21C 5/18, G21C 7/32, G21C 1/08, G21C 5/10

(54) **Initial core of nuclear reactor and method of loading fuel assemblies of nuclear reactor**
Anfänglicher Kern eines Kernreaktors und Verfahren zum Laden von Brennstoffelementen des Kernreaktors
Coeur initial d'un réacteur nucléaire et procédé de chargement d'ensembles de combustible de réacteur nucléaire

(30) Priority: 31.08.2011 JP 2011188882
(43) Date of publication of application: 06.03.2013
(73) Proprietor: Hitachi-GE Nuclear Energy, Ltd., Hitachi-shi Ibaraki 317-0073 (JP)
(72) Inventor: Mitsuyasu, Takeshi, Tokyo, 100-8220 (JP); Aoyama, Motoo, Tokyo, 100-8220 (JP); Nakadozono, Naoyuki, Tokyo, 100-8220 (JP); Ishii, Kazuya, Tokyo, 100-8220 (JP)
(74) Representative: Beetz & Partner mbB

(56) References cited:
- JP-A- H01 196 594
- US-A1- 2007 201 605
- US-B1- 6 504 889

## Description

### BACKGROUND OF THE INVENTION

### [Technical Field]

The present invention relates to an initial core of a boiling water reactor and a method of loading fuel assemblies of said boiling water reactor. An initial core and a method of loading fuel assemblies according to the preamble portions of claims 1 and 5, respectively, have been known from US 6,504,889 B1.

### [Background Art]

In a boiling water reactor, a plurality of fuel assemblies are loaded in a core disposed in a reactor pressure vessel. These fuel assemblies include a plurality of fuel rods filled with a plurality of fuel pellets manufactured with a nuclear fuel material including uranium, a lower tie plate for supporting lower end portions of these fuel rods, an upper tie plate for holding upper end portions of the fuel rods, and a channel box of a square cylinder attached to the upper tie plate and extended toward the lower tie plate. A plurality of fuel rods are bundled by fuel spacers for holding the mutual intervals at a predetermined width and are arranged in the channel box.

A core installed in a reactor pressure vessel of a newly-built boiling water reactor is called an initial core and all the fuel assemblies loaded in the initial core are fresh fuel assemblies with a burnup of 0 GWd/t. In the boiling water reactor having the initial core, a part of the fuel assemblies in the initial core is taken out after end of the operation in the first cycle and is replaced with the fresh fuel assemblies. A plurality of fuel assemblies taken out from the core after end of the operation in the first cycle, have a lower enrichment than the mean enrichment of all the fuel assemblies loaded in the initial core at the point of time of loading in the initial core.

The boiling water reactor having the initial core must continue the operation without supplying fuel assemblies over one operation cycle (for example, one year), so that the initial core includes a fissional material in a quantity larger than the quantity necessary to maintain the critical state. Therefore, the initial core holds excess reactivity, and in order to control the excess reactivity, the boiling water reactor is provided with a plurality of control rods, and furthermore, burnable poison is mixed in the nuclear fuel material in the nuclear fuel rods included in the fuel assemblies loaded in the initial core.

An example of such an initial core is described in JP 2008-145359 A. In the initial core described in JP 2008-145359 A, the quantity of the fissional material of the plurality of fuel assemblies arranged in peripheral portion in the initial core is larger than the quantity of the fuel assemblies arranged in the region on the inner side of the core from the peripheral portion. In the region on the inner side from the peripheral portion, a plurality of control cells including four fuel assemblies having a low mean enrichment are arranged and the control rods for reactor power adjustment are inserted between the four fuel assemblies composing the control cells.

Also in JP 2550381 B, an initial core is described. In the initial core, in first cycle, no fuel assemblies are arranged in a peripheral portion of the initial core and in the second cycle, a plurality of fuel assemblies are arranged in the peripheral portion. As mentioned above, no fuel assemblies are arranged in the peripheral portion of the initial core in the first cycle, so that the number of spent fuel assemblies taken out from the core after end of the first cycle can be reduced and the fuel cycle cost of the initial fuel can be reduced.

### SUMMARY OF THE INVENTION

### [Technical Problem]

In the initial core described in JP 2008-145359 A, the quantity of the fissional material in a plurality of fuel assemblies loaded in the peripheral portion in the initial core is increased and as a consequence, the mean enrichment of the initial core is increased. If the mean enrichment of the initial core is increased, the excess reactivity of the initial core is increased, so that the excess reactivity of the initial core must be controlled by the increase in the additional quantity of the burnable poison and the insertion amount of the control rods. The profitability of the reactor is lowered due to the increase in the additional quantity of the burnable poison and the exchange number of the control rods in the periodic inspection is increased due to the increase in the insertion amount of the control rods in the initial core.

In JP 2550381 B, in the first cycle, no fuel assemblies are arranged in the peripheral portion in the initial core, and in the second cycle, a plurality of fuel assemblies are arranged in the peripheral portion, and thus the fuel cycle cost of the initial fuel loaded in the initial core is reduced. The inventors followed this technical thought and aimed at simplification of the operation of the control rods in the initial core.

US 6,504,889 B1 discloses an initial core of a newly-built boiling water reactor comprising a central region disposing a plurality of first fuel supports for supporting fuel assemblies in which a first cooling water supply passage is formed for every fuel assembly supported and adapted to introduce cooling water to the fuel assembly inserted in the first cooling water supply passage; and a peripheral region surrounding the central region, and disposing a plurality of second fuel supports for supporting fuel assemblies in which a second cooling water supply passage having a pressure loss smaller than that of the first cooling water supply passage is formed for every fuel assembly supported and adapted to introduce cooling water to the fuel assembly inserted in the second cooling water supply passage.

This document further discloses a method of loading fuel assemblies of a boiling water reactor having an initial core for a newly-built boiling water reactor comprising a central region disposing a plurality of first fuel supports for supporting fuel assemblies in which a first cooling water supply passage is formed for every fuel assembly supported and adapted to introduce cooling water to the fuel assembly inserted in the first cooling water supply passage; and a peripheral region surrounding the central region, and disposing a plurality of second fuel supports for supporting fuel assemblies.US 2007/0201605 A1 discloses a natural circulation boiling water reactor wherein it is possible to increase the thermal margin. This is realized, among others, by providing fuel supports at the outermost region of the core having orifice with a pressure loss coefficient which is maximum and fuel supports in the outer region of the core having a pressure loss coefficient which is minimum.

An object of the present invention is to provide an initial core of a newly-built boiling water reactor and a method of loading fuel assemblies of said boiling water reactor capable of simplifying control rod operation.

### [Solution to Problem]

A feature of the present invention for accomplishing the above object is an initial core of a newly-built boiling water reactor comprising a central region disposing a plurality of first fuel supports for supporting fuel assemblies in which a first cooling water supply passage is formed for every fuel assembly supported and introduces cooling water to the fuel assembly inserted in the first cooling water supply passage; and a peripheral region surrounding the central region, and disposing a plurality of second fuel supports for supporting fuel assemblies in which a second cooling water supply passage having a pressure loss smaller than that of the first cooling water supply passage is formed for every fuel assembly supported and adapted to introduce cooling water to the fuel assembly inserted in the second cooling water supply passage;
wherein a plurality of water regions with no fuel assemblies loaded are formed right above a part of the first fuel supports in the central region; the fuel assemblies disposed in the central region are supported by the remaining first fuel supports; and the fuel assemblies disposed in the peripheral region are supported by the second fuel supports.

The plurality of water regions with no fuel assemblies loaded are formed right above a part of the first fuel supports in the central region, so that the infinite neutron multiplication factor of the fuel assemblies adjacent to the water regions can be reduced due to the action of the cooling water in the water regions. Therefore, for control of the excess reactivity of the initial core, the number of control rods for control of reactor power to be inserted into the initial core can be reduced during the operation of the reactor and the control rod operation in the reactor can be simplified.

### [Advantageous Effect of the Invention]

According to the present invention, the control rod operation in the nuclear reactor can be simplified.

### BRIEF DESCRIPTION OF THE DRAWINGS

FIG. 1 is a cross sectional view showing an initial core of a newly-built boiling water reactor according to embodiment 1 which is a preferred embodiment of the present invention.
FIG. 2 is a structural diagram showing a boiling water reactor having an initial core shown in FIG. 1.
FIG. 3 is a structural diagram showing a fuel assembly loaded in an initial core shown in FIG. 1.
FIG. 4 is a cross sectional view showing four fuel assemblies disposed around a neutron detector installed in an initial core shown in FIG. 1.
FIG. 5 is a plan view showing four fuel assemblies disposed in one cell of an initial core shown in FIG. 1.
FIG. 6 is a longitudinal cross sectional view showing a fuel support disposed in a central portion of an initial core shown in FIG. 1.
FIG. 7 is a longitudinal cross sectional view showing a fuel support disposed in a peripheral portion of an initial core shown in FIG. 1.
FIG. 8 is an explanatory drawing showing an insertion state of a control rod for control of reactor power in a control cell formed in a central portion of an initial core shown in FIG. 1.
FIG. 9 is a cross sectional view showing three different fuel assembly systems aiming at investigation of infinite neutron multiplication factor.
FIG. 10 is an explanatory drawing showing the infinite multiplication factor difference in each fuel assembly system shown in FIG. 9.
FIG. 11 is a cross sectional view showing an initial core of a newly-built boiling water reactor according to embodiment 2 which is another embodiment of the present invention.

### DETAILED DESCRIPTION OF THE PREFERRED EMBODIMENTS

The inventors executed various investigations, reduced the number of fuel assemblies to be loaded in an initial core due to unloading of a part of the fuel assemblies, and furthermore created a new constitution of the initial core capable of simplifying control rod operation in the initial core. The investigation results and the outline of the newly created initial core will be explained below.

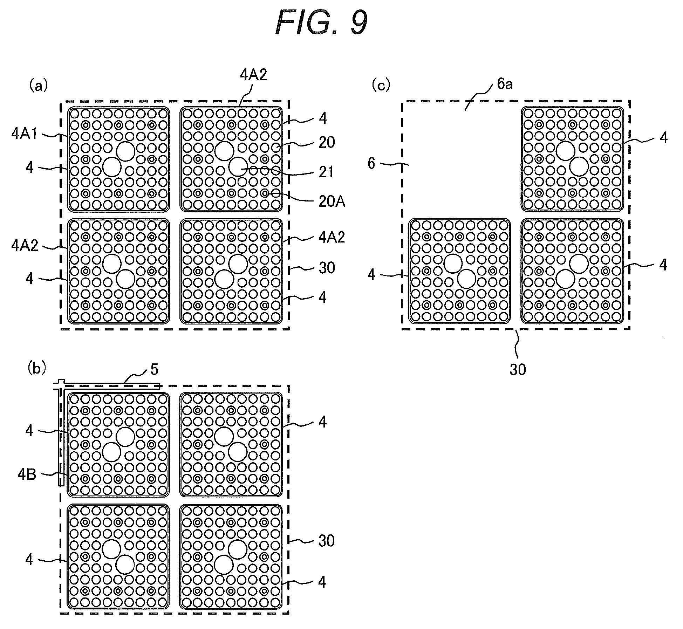

The inventors noted that excess reactivity of the initial core is higher than that of an equilibrium core and thus, control rod insertion amount of the initial core is larger than that of the equilibrium core, created an idea that a water region having a cross sectional area capable of disposing the fuel assembly in the initial core may be disposed in the initial core. The inventors investigated the three fuel assembly systems which are a part of the initial core shown in FIG. 9 before creating the idea that the water region may be disposed in the initial core. A boundary 30 of the fuel assembly systems (see FIG. 9) reflects perfectly and is an infinite system. A first fuel assembly system is shown in (a) of FIG. 9. The first fuel assembly system shown in (a) of FIG. 9 imitates the core operation state with no control rods inserted. In the first fuel assembly system 9, four fuel assemblies 4 are disposed in the neighborhood of each other. Among the four fuel assemblies 4, the mean enrichment of one fuel assembly 4A1 positioned on an upper left on the paper sheet of (a) of FIG. 9 is 2.0 wt% and the mean enrichment of the other three fuel assemblies 4A2 is 4.0 wt%. The mean enrichment of the four fuel assemblies 4 in the first fuel assembly system is 3.5 wt%. The mean void fraction in the fuel assemblies 4 in the first fuel assembly system is 40% which is a general mean void fraction of the core.

A second fuel assembly system shown in (b) of FIG. 9 includes four fuel assemblies 4 similar to the first fuel assembly system and furthermore, one control rod 5 being adjacent to one fuel assembly 4B positioned on an upper left on the paper sheet of (b) of FIG. 9 is inserted into the core. The respective mean enrichments of the four fuel assemblies in the second fuel assembly system are the same as those of the first fuel assembly system shown in (a) of FIG. 9.

In a third fuel assembly system shown in (c) of FIG. 9, no control rods are inserted, and one fuel assembly 4 on an upper left on the paper sheet of (c) of FIG. 9 is not loaded, and a water region 6a having a cross sectional area capable of disposing one fuel assembly 4 is formed in the upper left position. In the third fuel assembly system, the mean enrichment of the three fuel assemblies 4 is 4.0 wt%.

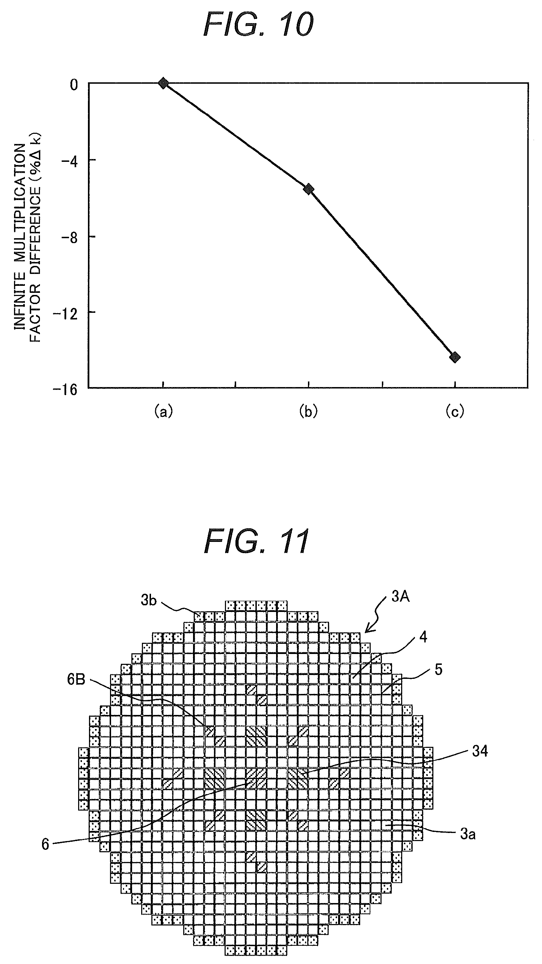

In these three fuel assembly systems, the inventors obtained the infinite neutron multiplication factor. Assuming the void fraction in the respective fuel assemblies in each fuel assembly system as 40%, on the basis of the infinite neutron multiplication factor of the first fuel assembly system shown in (a) of FIG. 9, the difference between this infinite multiplication factor and the infinite neutron multiplication factor in each of the second and third fuel assembly systems is shown in FIG. 10. The infinite neutron multiplication factor in the third fuel assembly system shown in (c) of FIG. 9 is lower than the infinite neutron multiplication factor in the second fuel assembly system shown in (b) of FIG. 9 with one control rod inserted. As a result, the inventors newly found that the water region 6a having a cross sectional area capable of disposing one fuel assembly 4 and being formed in the third fuel assembly system shown in (c) of FIG. 9 has a function of reducing the infinite neutron multiplication factor more than one control rod. The infinite neutron multiplication factor of the third fuel assembly system is lowered by about 14% Δk compared with that of the first fuel assembly system shown in (a) of FIG. 9 and is lowered by about 9% Δk compared with that of the second fuel assembly system shown in (b) of FIG. 9. As a result, the water region having a cross sectional area capable of disposing one fuel assembly 4 is formed in the initial core during the operation of the reactor, thus the excess reactivity of the initial core can be controlled, and there is no need to insert the control rods into the initial core during the operation of the reactor in order to control the excess reactivity. Therefore, the inventors found that in the initial core, the formation of the water region having a cross sectional area capable of disposing one fuel assembly 4 is effective in the control of the excess reactivity of the initial core.

The embodiments of the present invention with the aforementioned investigation results reflected on will be explained below.

### [Embodiment 1]

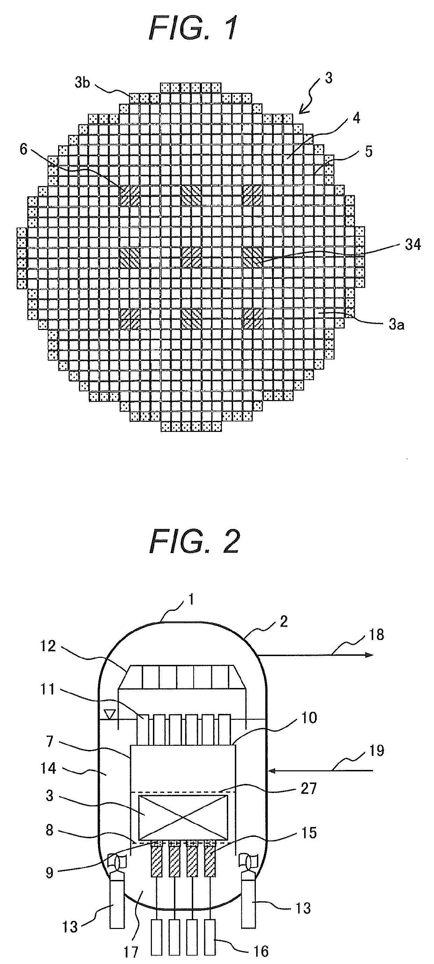

An initial core of a newly-built boiling water reactor according to embodiment 1 which is a preferable embodiment of the present invention, will be explained by referring to FIG. 1.

Firstly, a rough structure of a boiling water reactor to which the initial core of the present embodiment is applied will be explained by referring to FIGs. 1 and 2. The boiling water reactor 1 is provided with a core 3 which is an initial core in a reactor pressure vessel 2. The core 3 is surrounded by a cylindrical core shroud 7 installed in the reactor pressure vessel 2. A shroud head 10 covering the core 3 is installed at an upper end of the core shroud 7 and a steam separator 11 is attached to the shroud head 10 and is extended upward. A steam dryer 12 is disposed above the steam separator 11. The shroud head 10, the steam separator 11, and the steam dryer 12 are disposed in the reactor pressure vessel 2.

An upper lattice plate 27 is disposed in the core shroud 7 under the shroud head 10, is attached to the core shroud 7, and is positioned at the upper end of the core 3. A core support plate 8 is positioned at the lower end of the core 3, is disposed in the core shroud 7, and is installed in the core shroud 7. A plurality of internal pumps 13 are attached to bottom of the reactor pressure vessel 2 and an impeller of each internal pump 13 is disposed in an annular down comer 14 formed between the core shroud 7 and the reactor pressure vessel 2. A plurality of fuel supports 9 are installed on the core support plate 8. A plurality of control rod guide pipes 15 are disposed in the reactor pressure vessel 2 under the core support plate 8. Control rods 5 having a cross-shaped cross section are respectively disposed in the respective control rod guide pipes 15 and each control rod 5 is connected to a control rod drive mechanism 16 installed in a control rod driver housing (not drawn) attached to the bottom of the reactor pressure vessel 2.

A plurality (for example, 872 each) of fuel assemblies 4 are loaded in the core 3. The burnup of all the fuel assemblies loaded in the core 3 which is the initial core is 0 GWd/t before start of the operation of the boiling water reactor including the core 3. The boiling water reactor 1 including the core 3 with 872 fuel assemblies 4 loaded uses 205 control rods 5.

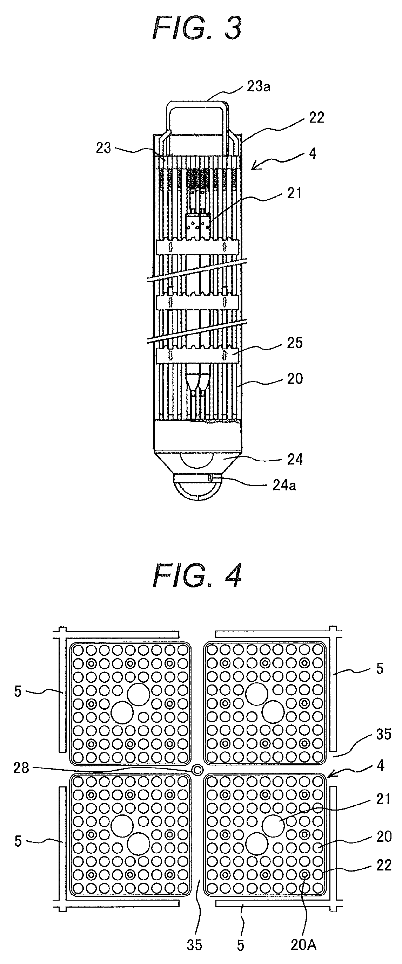

The fuel assembly 4 loaded in the core 3 will be explained by referring to FIG. 3. The fuel assembly 4 has a plurality of fuel rods 20, an upper tie plate 23, a lower tie plate 24, and a channel box 22. Many columnar fuel pellets manufactured using a nuclear fuel material including a fissional material (uranium 235) are filled in the fuel rods 20. A lower end portion of each fuel rod 20 is supported by the lower tie plate 24 and an upper end portion of each fuel rod 20 is held by the upper tie plate 23 with a handle 23a installed. The respective fuel rods 20 are arranged in a square lattice shape (see FIG. 4) and are bundled by a plurality of fuel spacers 25 so as to hold predetermined intervals between the mutual fuel rods. A plurality of fuel spacers 25 are disposed in an axial direction of the fuel assembly 4. Partial fuel rods 20A are disposed in an inner layer adjacent to an outermost layer of the arrangement of the fuel rods 20 as shown in FIG. 4. In a central portion of the cross section of the fuel assembly 4, two water rods 21 are disposed adjacently to each other and the respective fuel rods 20 surround the periphery of the water rods 21 (see FIG. 4). Also in the water rods 21, a lower end portion is supported by the lower tie plate 24 and an upper end portion is held by the upper tie plate 23. A plurality of fuel rods 20 and water rods 21, which are bundled by the plurality of fuel spacers 25, are disposed in the channel box 22, an upper end portion of which is attached to the upper tie plate 23 and is extended toward the lower tie plate 24. In a part of the fuel rods 20 in the fuel assembly 4, the fuel pellets include a burnable poison. In FIG. 4, numeral 28 indicates a neutron detector arranged in the core 3.

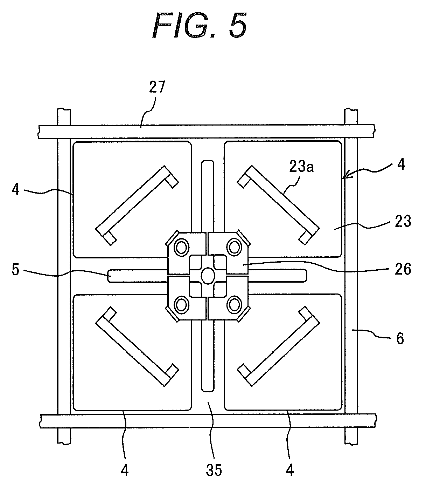

As shown in FIG. 5, in a state that upper end portions of the four fuel assemblies 4 are inserted in the respective square spaces formed in the upper lattice plate 27, the upper end portions of the four fuel assemblies 4 are pressed to the upper lattice plate 27 by a channel fastener 26 attached to the upper end of the channel box 22 of each fuel assembly 4 and held by the upper lattice plate 27. These four fuel assemblies 4 are disposed in the neighborhood of one control rod 5 and surround the control rod 5. One cell is formed by the one control rod 5 and the four fuel assemblies 4 disposed in the neighborhood of the control rod. The core 3 includes a plurality of cells.

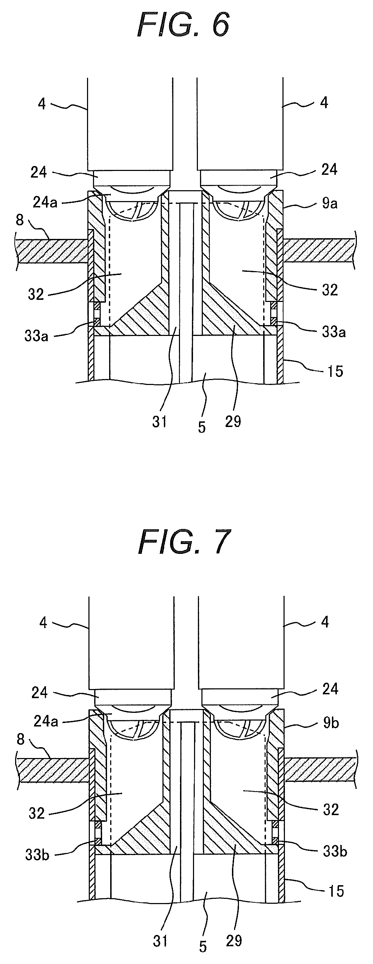

A plurality of fuel supports 9 removably attached to the core support plate 8 include a plurality of fuel supports 9a (see FIG. 6) disposed in a central portion 3a of the core 3 and a plurality of fuel supports 9b (see FIG. 7) disposed in a peripheral portion 3b of the core 3. The central portion 3a is surrounded by the peripheral portion 3b. Since the fuel supports 9a and the fuel supports 9b have substantially the same structure, the outline of the structure of the fuel support 9 will be explained using the fuel support 9a as an example. The diameter of the central portion 3a is 16/17 of the diameter of the core 3. The fuel support 9a includes a support body 29. In the support body 29, a through hole 31 having a cross-shaped cross section extending on all sides from an axial center for inserting the control rod 5 is formed and four cooling water supply passages 32 disposed so as to surround the through hole 31 are formed. One end of each cooling water supply passage 32 is opened at an upper end of the support body 29 and other end of each cooling water supply passage 32 is opened on side of the support body 29. An orifice 33a is installed in each cooling water supply passage 32 in the neighborhood of the side of the support body 29.

The fuel support 9b also has the aforementioned structure of the fuel support 9a. However, the fuel support 9a and the fuel support 9b are different from each other in one point. It is that opening area of the orifice 33a installed in the fuel support 9a is smaller than opening area of an orifice 33b installed in the cooling water supply passage 32 of the fuel support 9b. In other words, it is that pressure loss of the orifice 33a of the fuel support 9a is larger than pressure loss of the orifice 33b of the fuel support 9b.

A lower end portion 24a of each lower tie plate 24 of the four fuel assemblies 4 in each cell existing in the central portion 3a of the core 3 is separately inserted into the opening of each coolant supply passage 32 formed at the upper end of the support body 29 of the fuel support 9a. In this way, each fuel assembly 4 disposed in the central portion 3a of the core 3 is supported by the fuel support 9a. A lower end portion 24a of each lower tie plate 24 of the four fuel assemblies 4 in each cell existing in the peripheral portion 3b of the core 3 is separately inserted into the opening of each coolant supply passage 32 formed at the upper end of the support body 29 of the fuel support 9b. In this way, each fuel assembly 4 disposed in the peripheral portion 3b of the core 3 is supported by the fuel support 9b.

Four control cells 34 are disposed in the central portion 3a of the core 3 where the fuel supports 9a are disposed. These control cells 34 are disposed in a position at an equal distance from an axial center of the core 3. Furthermore, five water regions 6 are disposed in the central portion 3a. One water region 6 is disposed at the axial center of the core 3 and other four water regions 6 are disposed in a position at an equal distance from the axial center of the core 3. These four water regions 6 are respectively positioned in the square corners surrounding the axial center of the core 3 on the cross section of the core 3. Each control cell 34 is disposed at the position of the middle point of each side of the square connecting the two water regions 6. The positions where the five water regions 6 are disposed are the positions where the control cells 34 are disposed in the conventional initial core.

Each control cell 34 is a cell of the reactor, into which the control rod 5 for reactor power control for controlling the reactor power is inserted during the rated operation of reactor power of 100%. The infinite multiplication factor of the four fuel assemblies 4 in each control cell 34 is lower than the infinite multiplication factor of the fuel assembly in the cell other than the control cell 34, the cell existing around the control cell 34, in the central portion 3a.

The five water regions 6 are regions having a square cross section for occupying the cross sectional area capable of disposing four fuel assemblies 4. These water regions 6 are a space formed between the fuel assemblies 4 and having a square cross section for occupying the cross sectional area capable of disposing four fuel assemblies before the construction of the boiling water reactor including the initial core of the present embodiment is finished and cooling water is filled in the reactor pressure vessel 2. When cooling water is filled in the reactor pressure vessel 2, the cooling water is filled also in the space and the water regions 6 are formed. After cooling water is filled in the reactor pressure vessel 2, cooling water exists in the five water regions 6. In each water region 6, no fuel assemblies exist.

After start of the operation of the boiling water reactor, each control rod 5 is withdrawn from the core 3 and the boiling water reactor reach a state of criticality from a state of subcriticality. The withdrawal operation of each control rod 5 and the insertion operation which will be described later are performed by the control rod drive mechanism 16. Furthermore, when each control rod 5 inserted in the core 3 is gradually withdrawn, the reactor power is increased. When the reactor power becomes, for example, about 60% by the withdrawal of the control rods 5, the withdrawal of the control rods 5 is stopped. Thereafter, the number of revolutions of each internal pump 13 is increased, and the cooling water flow rate supplied to the core 3 is increased. Thus, the core flow rate is increased, and the reactor power is increased up to the rated power (100%). When the reactor power reaches the rated power, the increase of the core flow rate is stopped.

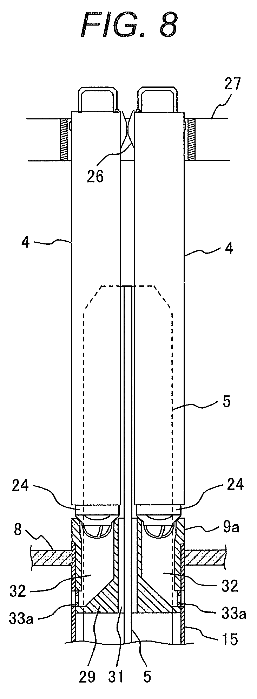

At this time, in the central portion 3a of the core 3, all the control rods 5 disposed in all the cells other than the control cells 34 and in all the water regions 6 are withdrawn from the core 3. In the central portion 3a, the upper end of each handle of all the control rods 5 withdrawn from the core 3 is positioned under the upper end of the fuel support 9a as shown in FIG. 6. Also in the peripheral portion 3b of the core 3, all the control rods 5 disposed in all the cells are withdrawn from the core 3. In the peripheral portion 3b, the upper end of each handle of all the control rods 5 withdrawn from the core 3 is also positioned under the upper end of the fuel support 9b as shown in FIG. 7. In the four control cells 34 in the central portion 3a, the control rod 5 for reactor power control is inserted into the core 3 and as shown in FIG. 8, the upper end of the control rod 5 is positioned above the upper end of the fuel support 9a.

The cooling water in the down comer 14 is pressurized by the drive of the internal pumps 13 and is supplied to the core 3 through a lower plenum 17 formed under the core 3. Concretely, the greater part of cooling water reaching the lower plenum 17 is supplied into the respective fuel assemblies 4 supported by the fuel supports 9a through each cooling water supply passage 32 of the fuel support 9a and furthermore is supplied into the respective fuel assemblies 4 supported by the fuel support 9b through each cooling water supply passage 32 of the fuel support 9b. The cooling water rising in the channel box 22 of each fuel assembly 4 is heated by heat generated by the nuclear fission of a fissional material filled in the fuel rods 20 and the partial fuel rods 20A and a part of the heated cooling water is vaporized. The gas-liquid two-phase flow including steam and cooling water is discharged above the core 3 through a through hole (not drawn) formed in the upper tie plate 23 of each fuel assembly 4.

The remaining cooling water reaching the lower plenum 17 is introduced into the respective control rod guide pipes 15 through an opening (not shown) formed in each control rod guide pipe 15. The cooling water is supplied to water gaps 35 formed between the fuel assemblies 4 being adjacent to each other through the through holes 31 formed in the fuel supports 9a and 9b. The cooling water goes up in each water gap 35. Even in the fuel supports 9a existing right under the water regions 6, the cooling water flowing into the control rod guide pipes 15 is introduced into the through holes 31. This cooling water is supplied into the water regions 6 from the through holes 31. The respective cooling water supplied into each water region 6 and each water gap 35 is heated by heat discharged from the inside of the fuel assemblies 4 and goes up in each water region 6 and each water gap 35. However, the cooling water flowing in each water region 6 and each water gap 35 does not boil. In the respective fuel supports 9a existing right under each water region 6, the entrance of each cooling water supply passage 32 formed in these fuel supports 9a is blocked so as to prevent the cooling water from being supplied to the water regions 6 through the cooling water supply passages 32.

The cooling water rising in each water region 6 and each water gap 35 is discharged from each water region 6 and each water gap 35 and is mixed with the gas-liquid two-phase flow discharged from each fuel assembly 4. The gas-liquid two-phase flow including the cooling water discharged from the water regions 6 and the water gaps 35 is led into the steam separator 11. The steam included in the gas-liquid two-phase flow is separated from the cooling water by the steam separator 11 and is introduced to the steam dryer 12. The steam from which moisture is further removed by the steam dryer 12 is supplied to a turbine (not drawn) through a main steam pipe 18. The turbine is rotated by the steam and rotates a generator (not drawn) connected to the turbine. Electricity is generated by the rotation of the generator. Steam discharged from the turbine is condensed by a condenser (not drawn) to water. This water is supplied into the reactor pressure vessel 2 as feed water through a feed water pipe 19.

The cooling water separated from the gas-liquid two-phase flow by the steam separator 11 is introduced into the down comer 14 and is mixed with feed water supplied from the feed water pipe 19 in the down comer 14. This cooling water is pressurized by the internal pumps 13 and as described before, is supplied into the core 3, that is, each fuel assembly 4.

When the reactor power is lowered than the rated power in correspondence to the progress of the operation in the first cycle of the boiling water reactor 1, the core flow rate is increased and the reactor power is kept at the rated power. However, when the core flow rate increases to 100%, the core flow rate is reduced, and the reactor power is reduced down to a predetermined reactor power lower than about 60%, and then the control rod pattern is exchanged. Due to the exchange of the control pattern, the control rods 5 in the control cells 34 are withdrawn and the reactor power is increased up to about 60%. Thereafter, the core flow rate is increased and the reactor power is increased up to the rated power. The reduction of the reactor power from the rated power in correspondence to consumption of the fissional material is compensated by an increase in the core flow rate. When the core flow rate increases again to 100%, as mentioned above, the control rod pattern is exchanged. The control rod pattern exchange is repeated until all the control rods 5 in the control cells 34 are withdrawn. When all the control rods 5 in the control cells 34 are withdrawn and the core flow rate increases to 100%, the operation of the boiling water reactor 1 in the first cycle is finished. At the time, all the control rods 5 are inserted into the core 3, and the boiling water reactor 1 is stopped.

In the present embodiment, when the boiling water reactor 1 is in operation, the control of the excess reactivity of the reactor in the first cycle of the initial core is executed by the cooling water in the water regions 6 using the cooling water in the water regions 6 in addition to neutron absorber (for example, B₄C) included in the control rods 5 in the control cells 34 and burnable poison included in the fuel assemblies 4. As described before, the infinite neutron multiplication factor of the fuel assemblies 4 is reduced by each water region 6 in which cooling water exists, so that the number of control cells can be reduced than that in the conventional initial core and in correspondence to it, the number of the control rods 5 for reactor power control can be reduced. Therefore, in correspondence to the reduction in the number of the control rods 5 for reactor power control, the withdrawal operation of the control rods 5 for reactor power control in the control cells 34 during the rated power operation of the boiling water reactor 1 can be simplified.

In the present embodiment, the cells of the water regions 6 in the first cycle are changed to the control cells 34 in the second cycle, so that the cells changing the water regions 6 to the control cells 34 can lengthen the life span of the control rods 5. Namely, in the first cycle, each control rod 5 disposed in the position of each water region 6 is in a state that all the control rods are withdrawn from the core 3 during a period of the operation in the first cycle. Therefore, in the second cycle, substantially fresh control rods 5 are inserted into the cells changed to the control cells 34 from the water regions 6.

In the present embodiment, in the first cycle, the fuel assemblies 4 are not disposed in the respective water regions 6, so that the number of spent fuel assemblies taken out from the core 3 after end of the first cycle can be reduced and the fuel cycle cost of the initial fuel can be reduced.

### [Embodiment 2]

An initial core of a newly-built boiling water reactor according to embodiment 2, which is another embodiment of the present invention, will be explained by referring to FIG. 11.

A core 3A which is the initial core of the present embodiment has a structure that in the core 3 of the embodiment 1, the water region 6 disposed at the axial center of the core is removed, and two water regions 6B having a square cross section for occupying the cross sectional area capable of disposing one fuel assembly 4 are disposed in each cell in the diagonal direction instead of the water regions 6 which are regions having a square cross section for occupying the cross sectional area capable of disposing four fuel assemblies 4. The other structure of the core 3A is the same as that of the core 3.

In each cell that the two water regions 6B are disposed in the diagonal direction, two fuel assemblies 4 are disposed in another diagonal direction orthogonal to the diagonal line connecting the two water regions 6B. In the core 3A, eight cells that two water regions 6B are disposed in the diagonal direction are formed. The water region 6 disposed at the center of the core 3A forms a region having a square cross section for occupying the cross sectional area capable of disposing four fuel assemblies 4 similarly to the water region 6 in the embodiment 1. The control cells 34 are respectively disposed at a middle point of each side of a square surrounding the water region 6, in which four cells with two water regions 6B disposed in the diagonal direction are disposed in the corners. The diameter of the central portion 3a is 16/17 of the diameter of the core 3A.

At the time of the rated power operation of the boiling water reactor including the core 3A, the control rods 5 of each cell that two water regions 6B having a square cross section for occupying the cross sectional area capable of disposing one fuel assembly 4 are disposed in the diagonal direction are in a state that all the control rods 5 are withdrawn from the core 3A.

The present embodiment can obtain the effects generated in the embodiment 1. Furthermore, in the present embodiment, the number of water regions 6 having a square cross section for occupying the cross sectional area capable of disposing four fuel assembly 4 is smaller than that of the core 3 and instead, a plurality of cells that two water regions 6B are disposed in the diagonal direction are formed in the core 3A, so that the power distribution in a radius direction of the core is more flattened than that of the embodiment 1 and economical efficiency of fuel can be improved.

In the boiling water reactor including the core 3 or 3A, a method of loading fuel assemblis of a nuclear reactor described below can be applied. The method of loading fuel assemblies that is applied to the core 3 will be explained.

In the boiling water reactor 1 having the core 3 which is an initial core, a plurality of fuel assemblies 4 having a burnup of 0 GWd/t are loaded in the core 3 before starting the operation of the boiling water reactor 1. These fuel assemblies 4 are successively loaded in the region other than the region for forming the water regions 6 in the core 3. The fuel assemblies 4 having a burnup of 0 GWd/t are not loaded in the region for forming the water regions 6. The boiling water reactor 1 having the core 3 formed by loading these fuel assemblies 4 is operated in the first cycle which is a first operation cycle after the boiling water reactor 1 is constructed. The operation in the first cycle is finished and the boiling water reactor 1 is stopped. After the stop of the boiling water reactor 1, a part of the fuel assemblies 4 in the core 3 is taken out from the reactor pressure vessel 2 and is exchanged with fresh fuel assemblies 4. Spent fuel assemblies 4 taken out from the reactor pressure vessel 2 for fuel exchange are fuel assemblies 4 having a low mean enrichment which are loaded in the core 3 before start of the first cycle. The fuel assemblies 4 having a high mean enrichment which are loaded in the core 3 before start of the first cycle are not taken out from the reactor pressure vessel 2 after end of the operation in the first cycle and exist in the core 3 even at the time of the operation in the next second cycle.

When the operation in the first cycle is finished and the fuel assemblies 4 in the core 3 are exchanged, a part of the fuel assemblies 4 having a low mean enrichment which are loaded in the core before start of the first cycle, are loaded in the water regions 6, respectively. In each of all the water regions 6, four fuel assemblies 4 having a low mean enrichment which are loaded in the core before start of the first cycle are loaded.

Fresh fuel assemblies 4 having a high mean enrichment and a burnup of 0 GWd/t are loaded in the position in the core 3 where the fuel assemblies 4 taken out from the reactor pressure vessel 2 exist during the operation in the first cycle and in the position in the core 3 where the fuel assemblies 4 loaded in the water regions 6 exist during the operation in the first cycle, respectively.

After the loading of the fuel assemblies 4 aforementioned is finished, the operation of the boiling water reactor 1 in the second cycle is started. The four water regions 6 formed in the core 3 in the first cycle become control cells 34 so that four fuel assemblies 4 having a lower infinite neutron multiplication factor than that of the fuel assemblies 4 surrounding the control cell 34 are loaded and a control rod 5 for reactor power control is disposed, in the second cycle. In the second cycle, the number of control cells 34 is increased than that in the first cycle. In the second cycle, the water regions 6 substituted for the control rods 5 in the first cycle do not exist, so that the insertion amount of the control rods 5 is increased and the number of control cells (cells for adjusting the reactivity by the control rods) 34 is increased.

Also to the boiling water reactor having the core 3A, the method of loading fuel assemblies applied to the boiling water reactor having the core 3 can be applied.

### [REFERENCE SIGNS LIST]

1 : boiling water reactor, 2 : reactor pressure vessel, 3, 3A : core, 4 : fuel assembly, 5 : control rod, 6, 6a, 6b : water region, 7 : core shroud, 8 : core support plate, 9, 9a, 9b : fuel support, 13 : internal pump, 15 : control rod guide pipe, 16 : control rod drive mechanism, 20 : fuel rod, 22 : channel box, 29 : support body, 31 : through hole, 32 : cooling water supply passage, 33a, 33b : orifice, 35 : water gap.

## Claims

1. An initial core (3) of a newly-built boiling water reactor (1) comprising:
a central region (3a) disposing a plurality of first fuel supports (9a) for supporting fuel assemblies (4) in which a first cooling water supply passage (32) is formed for every fuel assembly (4) supported and adapted to introduce cooling water to the fuel assembly (4) inserted in the first cooling water supply passage (32); and
a peripheral region (3b) surrounding the central region (3a), and disposing a plurality of second fuel supports (9b) for supporting fuel assemblies (4) in which a second cooling water supply passage having a pressure loss smaller than that of the first cooling water supply passage is formed for every fuel assembly (4) supported and adapted to introduce cooling water to the fuel assembly (4) inserted in the second cooling water supply passage;
wherein a plurality of water regions (6) with no fuel assemblies loaded are formed right above a part of the first fuel supports (9a) in the central region (3a) ;
wherein the fuel assemblies (4) disposed in the central region (3a) are supported by the remaining first fuel supports (9a); and
wherein the fuel assemblies (4) disposed in the 0235-71725EP-CM/Kf peripheral region (3b) are supported by the second fuel supports (9b).

2. The initial core of a newly-built boiling water reactor according to claim 1, wherein the water regions (6) are regions having a square cross section for occupying a cross sectional area capable of disposing four fuel assemblies (4).

3. The initial core of a newly-built boiling water reactor according to claim 1, wherein a plurality of cells (34) including two of the fuel assemblies (4) disposed along one diagonal line of the cell and two of the water regions (6) disposed along another diagonal line of the cell orthogonal to the one diagonal line and having a square cross section for occupying a cross sectional area capable of disposing one the fuel assembly (4) are formed right above a part of the first fuel supports in the central region (3a).

4. The initial core of a newly-built boiling water nuclear reactor according to claim 1, wherein a plurality of control cells (34) are disposed in said central region and the control cells (34) include four fuel assemblies (4) having an infinite neutron multiplication factor lower than an infinite neutron multiplication factor of the fuel assemblies (4) surrounding the control cell and a control rod (5) for reactor power control inserted among the four fuel assemblies.

5. A method of loading fuel assemblies of a boiling water reactor having an initial core (3) according to claim 1, comprising the steps of:
stopping the operation of the boiling water reactor (1) after its first operation cycle;
taking out a part of the spent fuel assemblies (4) that were supported in the core (3) during the first operation cycle;
loading fuel assemblies (4) having a neutron multiplication factor lower than infinite in each of the water regions (6);
loading fresh fuel assemblies (4) with a burnup of 0 GWd/ t in each first position where spent fuel assemblies have been taken out and in each second position from where fuel assemblies (4) have been loaded to the water regions (6).

## Patentansprüche

1. Anfangskern (3) eines neu errichteten Siedewasserreaktors (1) mit:
einem mittleren Bereich (3a), in dem eine Mehrzahl erster Brennstoffträger (9a) angeordnet ist zum Tragen von Brennelementen (4), in dem ein erster Kühlwasserversorgungskanal (32) für jedes getragene Brennelement (4) ausgebildet ist und ausgelegt ist, Kühlwasser in das Brennelement (4) einzuführen, das in den ersten Kühlwasserversorgungskanal (32) eingeführt ist, und
einem Umfangsbereich (3b), der den mittleren Bereich (3a) umgibt und in dem eine Mehrzahl zweiter Brennstoffträger (9b) angeordnet ist zum Tragen von Brennelementen (4), in dem ein zweiter Kühlwasserversorgungskanal mit einem Druckverlust, der kleiner ist als der des ersten Kühlwasserversorgungskanals, für jedes getragene Brennelement (4) ausgebildet ist und der dazu ausgelegt ist, Kühlwasser in das in dem zweiten Kühlwasserversorgungskanal eingeführte Brennelement einzuführen,
wobei in dem mittleren Bereich (3a) eine Mehrzahl von Wasserbereichen (6) ohne geladene Brennelemente direkt über einem Teil der ersten Brennstoffträger (9a) ausgebildet ist,
wobei die in dem mittleren Bereich (3a) angeordneten Brennelemente (4) von den verbleibenden ersten Brennstoffträgern (9a) getragen werden, und
wobei die in dem Umfangsbereich (3b) angeordneten Brennelemente (4) von den zweiten Brennstoffträgern (9b) getragen werden.

2. Anfangskern eines neu errichteten Siedewasserreaktors nach Anspruch 1, wobei die Wasserbereiche (6) Bereiche mit einem quadratischen Querschnitt sind, um ein Querschnittsgebiet zu besetzen, in dem vier Brennelemente (4) angeordnet werden können.

3. Anfangskern eines neu errichteten Siedewasserreaktors nach Anspruch 1, wobei eine Mehrzahl von Zellen (34), die zwei der Brennelemente (4), die entlang einer Diagonale der Zelle angeordnet sind, und zwei der Wasserbereiche (6) umfassen, die entlang einer anderen Diagonale der Zelle, die senkrecht auf der einen Diagonale steht, angeordnet sind und einen quadratischen Querschnitt aufweisen, um ein Querschnittsgebiet zu besetzen, in dem eines der Brennelemente (4) angeordnet werden kann, direkt über einem Teil der ersten Brennstoffträger in dem mittleren Bereich (3a) ausgebildet sind.

4. Anfangskern eines neu errichteten Siedewasserreaktors nach Anspruch 1, wobei eine Mehrzahl von Steuerzellen (34) in dem mittleren Bereich angeordnet sind, und die Steuerzellen (34) vier Brennelemente (4) mit einem Neutronenmultiplikationsfaktor in einem unendlichen Medium, der kleiner ist als der Neutronenmultiplikationsfaktor in einem unendlichen Medium der Brennelemente (4), umfassen, die die Steuerzelle und einen Steuerstab (5) zur Reaktorleistungssteuerung, der zwischen den vier Brennelementen eingeführt ist, umgeben.

5. Verfahren zum Laden von Brennelementen eines Siedewasserreaktors mit einem Anfangskern (3) nach Anspruch 1, mit den Schritten:
Stoppen des Betriebs des Siedewasserreaktors (1) nach seinem ersten Betriebszyklus,
Herausnehmen eines Teils der abgebrannten Brennelemente (4), die während des ersten Betriebszyklus in dem Kern (3) getragen wurden,
Laden von Brennelementen (4), die einen Neutronenmultiplikationsfaktor aufweisen, der kleiner ist als Unendlich in jedem der Wasserbereiche (6);
Laden frischer Brennelemente (4) mit einem Abbrand von O Gwd/t in jeder ersten Position, in der abgebrannte Brennelemente herausgenommen wurden, und in jeder zweiten Position, aus der Brennelemente (4) in die Wasserbereiche (6) geladen wurden.

## Revendications

1. Coeur initial (3) d'un réacteur à eau bouillante (1) nouvellement construit comprenant :
une région centrale (3a) disposant une pluralité de premiers supports (9a) de combustible pour supporter des assemblages combustibles (4) dans laquelle un premier passage (32) d'apport d'eau de refroidissement est formé pour chaque assemblage combustible (4) supporté et adapté à introduire de l'eau de refroidissement dans l'assemblage combustible (4) inséré dans le premier passage (32) d'apport d'eau de refroidissement ; et
une région périphérique (3b) entourant la région centrale (3a), et disposant une pluralité de deuxièmes supports (9b) de combustible pour supporter des assemblages combustibles (4) dans laquelle un deuxième passage d'apport d'eau de refroidissement ayant une perte de pression plus petite que celle du premier passage d'apport d'eau de refroidissement est formé pour chaque assemblage combustible (4) supporté et adapté à introduire de l'eau de refroidissement dans l'assemblage combustible (4) inséré dans le deuxième passage d'apport d'eau de refroidissement ;
dans lequel une pluralité de régions (6) d'eau sans assemblages combustibles chargés sont formées juste au-dessus d'une partie des premiers supports (9a) de combustible dans la région centrale (3a) ;
dans lequel les assemblages combustibles (4) disposés dans la région centrale (3a) sont supportés par les premiers supports (9a) de combustible restants ; et
dans lequel les assemblages combustibles (4) disposés dans la région périphérique (3b) sont supportés par les deuxièmes supports (9b) de combustible.

2. Coeur initial d'un réacteur à eau bouillante nouvellement construit selon la revendication 1, dans lequel les régions (6) d'eau sont des régions ayant une section transversale carrée pour occuper une superficie de section transversale apte à disposer quatre assemblages combustibles (4).

3. Coeur initial d'un réacteur à eau bouillante nouvellement construit selon la revendication 1, dans lequel une pluralité de cellules (34) incluant deux des assemblages combustibles (4) disposés le long d'une ligne diagonale de la cellule et deux des régions (6) d'eau disposées le long d'une autre ligne diagonale de la cellule orthogonale à la première ligne diagonale et ayant une section transversale carrée pour occuper une superficie de section transversale apte à disposer un assemblage combustible (4) sont formées juste au-dessus d'une partie des premiers supports de combustible dans la région centrale (3a).

4. Coeur initial d'un réacteur à eau bouillante nouvellement construit selon la revendication 1, dans lequel une pluralité de cellules (34) témoins sont disposées dans ladite région centrale et les cellules (34) témoins incluent quatre assemblages combustibles (4) ayant un facteur de multiplication des neutrons infini inférieur à un facteur de multiplication des neutrons infini des assemblages combustibles (4) entourant la cellule témoin et une barre (5) témoin pour un contrôle de puissance de réacteur insérée entre les quatre assemblages combustibles (4).

5. Procédé de chargement d'assemblages combustibles d'un réacteur à eau bouillante ayant un coeur initial (3) selon la revendication 1, comprenant les étapes de :
arrêt du fonctionnement du réacteur à eau bouillante (1) après son premier cycle de fonctionnement ;
sortie d'une partie des assemblages combustibles (4) usés qui étaient supportés dans le coeur (3) pendant le premier cycle de fonctionnement ;
chargement d'assemblages combustibles (4) ayant un facteur de multiplication des neutrons inférieur à l'infini dans chacune des régions (6) d'eau ;
chargement d'assemblages combustibles (4) frais avec un taux de combustion de 0 GWj/t dans chaque première position ou des assemblages combustibles (4) usés ont été sortis et dans chaque deuxième position d'où des assemblages combustibles (4) ont été chargés dans les régions (6) d'eau.
